# EUROPEAN PATENT APPLICATION

(11) **EP 2 514 502 A1**
(43) Date of publication of application: **24.10.2012**
(21) Application number: 12002609.1
(22) Date of filing: 13.04.2012
(51) Int. Cl.: B01D 39/08

(54) **Filter cartridge for use in a fluid filter housing and method of making same**

(30) Priority: 14.04.2011 US 201113086756
(71) Applicant: Eaton Corporation, Cleveland Ohio 44114-2584 (US)
(72) Inventor: Quintel, Mark Anthony, Kalamazoo MI 49006-5400 (US)
(74) Representative: Schmidbauer, Andreas Konrad

(57) **Abstract**

A cartridge for use with a filter housing with a cavity having an inlet and outlet. The cartridge is formed from a cut length of monofilament polyethylene woven mesh tubular material to form a sleeve. One end of the sleeve is gathered to closure, fused and banded to form a pocket. The pocket is then filled with particulate or granular polymer which may be coated with organosilane antimicrobial agent permanently bound. The opposite end of the sleeve is then gathered, fused, folded over and banded to form a loop to facilitate removal of the cartridge from a filter housing.

## Description

### CROSS REFERENCE TO RELATED APPLICATION

This application is related to co-pending application of Mark Anthony Quintel, Derek Ronald Thelen, Christopher Scott Rau and Richard Jacobs, Application No. 13/086,699, filed April 14, 2011, entitled "FLUID FILTER AND METHOD OF FILTERING", assigned to the assignee of the present application and filed concurrently herewith.

### BACKGROUND

The present disclosure relates to fluid filters and particularly filters of the type utilized for filtering waste water from a closed system such as a fire suppression sprinkler system or fire hydrants. Such systems are required to be drained and/or flushed periodically to remove sediments and rust to insure proper operation of the system when the need arises.

Under current environmental regulations, wastewater drained from the aforesaid type fluid systems is required to be filtered of contaminants prior to discharge in drainage systems, for example a storm drain. Therefore, it has been required to provide a filtration unit attachable to the source of fluid, such as wastewater, to be drained at the location of connection to the system. Thus, it has been desired to provide a suitable filtration unit capable of being transported to the site. It has further been desired to have a filtration unit in which the filtering media can readily be replaced upon the media becoming saturated with contaminants and unable to provide the desired filtering action.

Heretofore, filtration units of the type intended for portable use with replacement filtering elements have been somewhat complex and difficult to replenish with filtering media capable of providing the desired high degree of filtration. Furthermore, existing wastewater filtration units intended for transporting to a site or for installation in a stationary closed system have been of significant bulk or volume and weight as to render the usage thereof rather cumbersome and, in some applications, requiring more than one operator.

Thus, it has been desired to provide a way or means of readily and easily replacing the filter media in a closed fluid filtration system to provide adequate filtering thereby enabling discharge of the fluid into a storm drain or other open body of liquid.

### SUMMARY

The filter cartridge of the present disclosure employs a tubular sleeve formed of monofilament polyethylene woven mesh filled with particulate or granular polymer which may be in shredded form with the opposite ends of the sleeve closed and fused to retain the particulate or granular material therein. The cartridge is then in a form to be inserted in a housing having a fluid inlet near a proximal end of the cartridge and a fluid outlet proximate the distal end of the cartridge.

The particulate or granular polymer material may be coated with an organosilane antimicrobial agent. In one disclosed version, the monofilament woven mesh sleeve is woven of monofilament of about 0.254 mm thickness with a tensile strength per ASTM D-2265 of about 7.5 pounds; and, the sleeve may have a tubular wall thickness of about 0.635 mm. The monofilament may have a specific gravity of about 1.38. The particulate or granular polymer material may have a specific gravity in the range of about 0.27 to 0.40.

One exemplary version of the disclosed method includes cutting a monofilament polyethylene woven mesh sleeve having a tubular configuration to a desired length, closing and banding one end of the sleeve and fusing the banded end. The sleeve in the disclosed exemplary version has a nominal outside diameter (O.D.) of about 78 mm and is cut to a length of about 610 mm. The pocket formed by the closed end of the sleeve is then filled with the particulate or granular polymer material; and, the remaining open end is gathered, closed, fused and then folded over and banded to form a loop in the end thereof to facilitate removal of the cartridge thus formed from a filtration system housing.

### BRIEF DESCRIPTION OF THE DRAWINGS

FIGURE 1 is a side view of an exemplary version of the cartridge of the present disclosure with a portion of the outer sleeve broken away;

FIGURE 2 is a side view of the cut length of tubular woven mesh sleeve for the cartridge of FIGURE 1;

FIGURE 3 is a view of the sleeve of FIGURE 2, with one end banded and fused;

FIGURE 4 is a pictorial view showing filling of the sleeve of FIGURE 3;

FIGURE 5 is a view similar to FIGURE 3 showing the closure and forming of the remaining end of the sleeve after filtering of FIGURE 4;

FIGURE 6 shows the folding over and banding of the end of FIGURE 5; and,

FIGURE 7 shows the cartridge of FIGURE 1 indicated in a filter housing.

### DETAILED DESCRIPTION

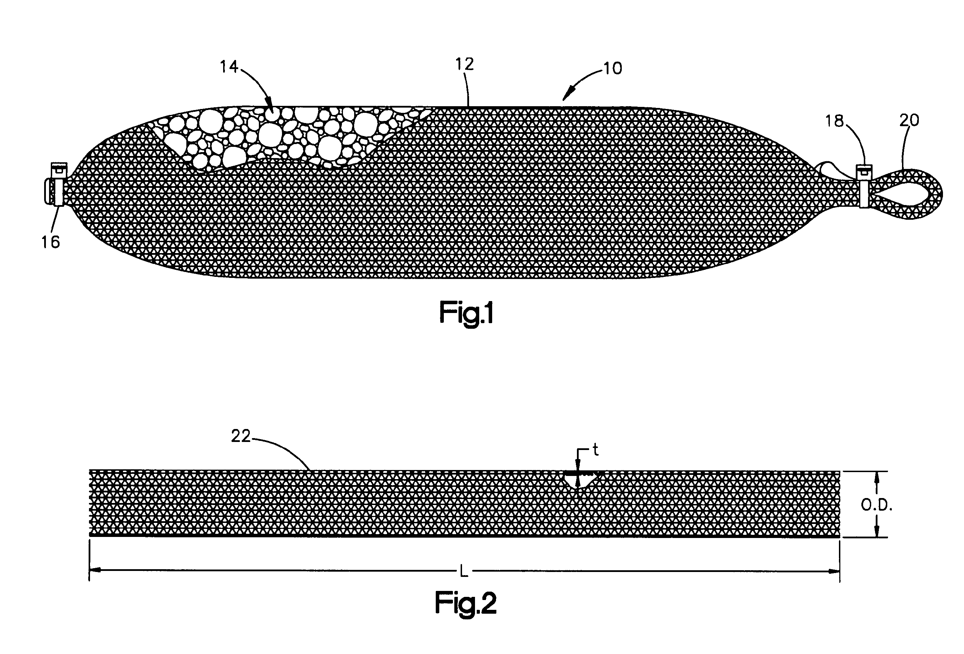

Referring to FIG. 1, the filter cartridge of the present disclosure is indicated generally at 10 and has a casing or sleeve 12 with an elongated tubular configuration which is filled with particulate or polymer material 14 with one end of the sleeve gathered to closure and banded with clamp band 16. The opposite end of the sleeve is gathered, closed, fused and subsequently folded over and banded with a clamp band 18 to form a loop 20 therein to facilitate removal of the cartridge from a filter housing.

In the present practice, it has been found satisfactory to utilize monofilament polyethylene terephthalate material for the woven mesh sleeve having a monofilament thickness of about 0.254 mm with a specific gravity of about 1.38 and a tensile strength per ASTM D-2265 of about 7.5 pounds. Referring to FIG. 2, the exemplary version disclosed is formed of a tubular sleeve 22 having a nominal O.D. of about 78 mm and a cut length of about 610 mm. However, other suitable monofilament polymer material may also be utilized for the woven mesh sleeve 12; and, other sizes may be employed if desired.

Referring to FIG. 2, in one version of the cartridge of the present disclosure, the sleeve 12 is formed, as by a hot knife, cutting to length from a tubular woven mesh material 22 having a nominal O.D. of 78 mm and in the range of about 38 mm to 89 mm and a nominal wall thickness indicated by reference character "t" in FIG. 2 of about 0.635 mm and a nominal length denoted by reference character "I" in FIG. 2 of about 610 mm. In the present practice, the monofilament woven mesh sleeve having an initial nominal O.D. of about 38 mm is capable of expansion to a diameter in the range of about 38 mm to 89 mm.

The particulate or granular polymer material is obtainable from AbTech Industries Inc., 4110 North Scottsdale Road, Suite 235, Scottsdale, AZ 85251, and is sold under the trade name SMART SPONGE® PLUS under Manufacturer's identification ACX-10-N-PLUS. In the present practice, it has been found satisfactory to coat the particulate polymer material with an organosilane antimicrobial agent chemically and permanently bound to the polymer surface for reducing coliform bacteria. However, it will be understood that other suitable particulate or granular polymer material may be employed in the cartridge of the present disclosure if desired.

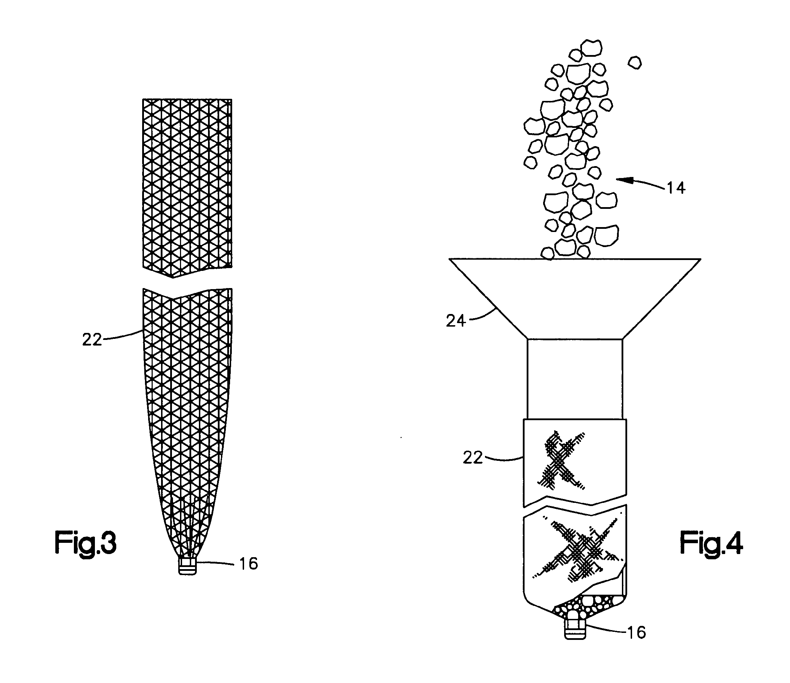

Referring to FIG. 2, the method as practiced by initially cutting the length "L" of the sleeve tubing 22 such as by a using hot knife. They method then proceeds to gather to closure and band with the clamp band 16 one end of the tubular sleeving and heat fusing the end subsequent to banding, as shown in FIG. 3, thereby forming a pocket within the sleeve tube 22.

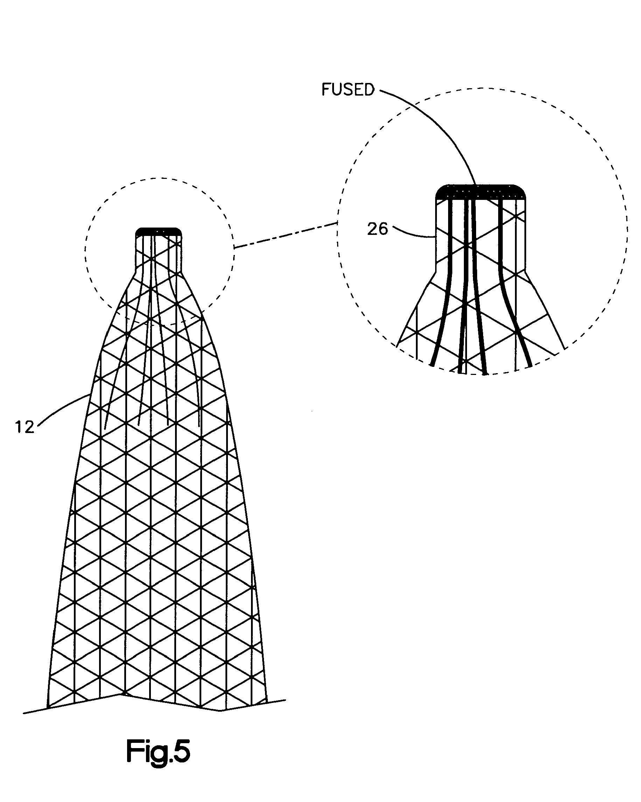

Referring to FIG. 4, the opened end of the sleeve 22 is then fitted with a funnel such as funnel 24 and the particulate or granular polymer material 14 is then introduced into the sleeve pocket through the funnel as illustrated in FIG. 4. Upon completion of the fill, the funnel 24 is removed; and, the remaining open end denoted by reference numeral 26 of the tubular sleeve is closed and fused as shown in FIG. 5.

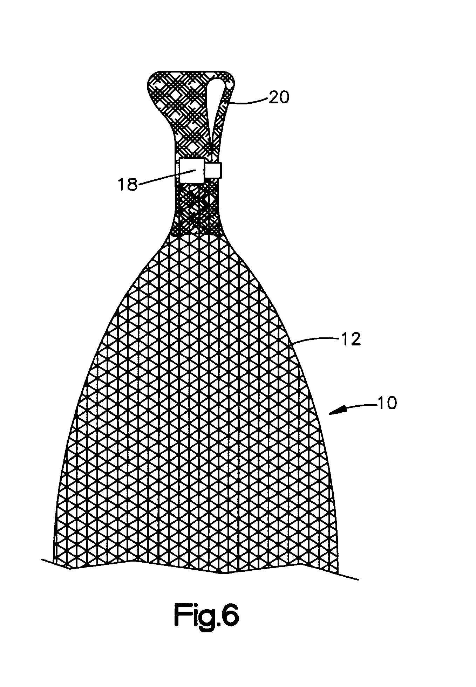

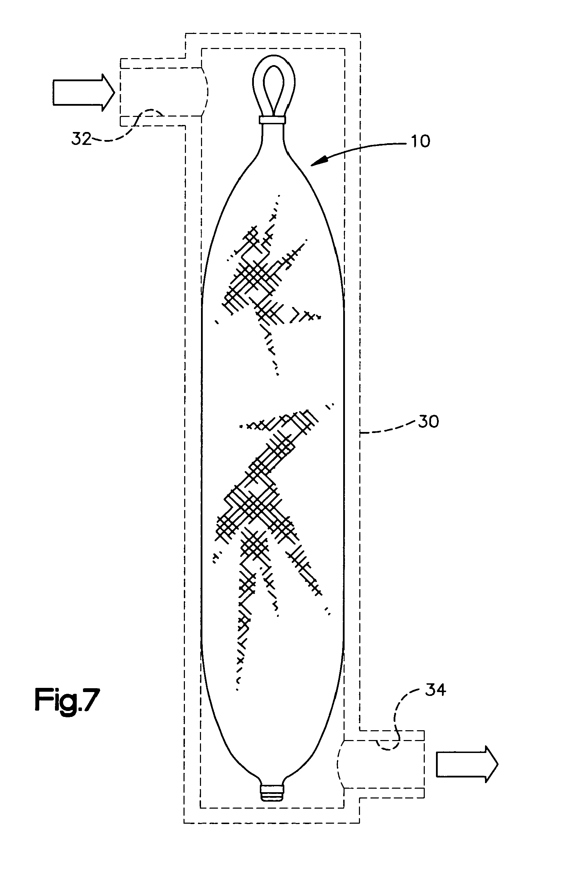

Subsequently, the end 26 is folded over upon itself to form a loop 20 and the end is banded by clamp band 28 as shown in FIG. 6 to form the closed sleeve 12 and the completed cartridge 10. Referring to FIG. 7, the cartridge 10 is shown as installed in a typical filter housing 30 as indicated in dashed outline and having an inlet 32 near one end of the cartridge 10 and an outlet proximate a distal end of the cartridge as denoted by reference numeral 34.

The present disclosure describes a filter cartridge formed of monofilament woven polyethylene mesh sleeve with the ends closed and banded to contain within the sleeve particulate or granular polymer material which may be coated with an organosilane antimicrobial agent. The cartridge is adapted for insertion in a filter housing having an inlet near one end of the tubular cartridge sleeve and an outlet proximate the opposite end of the sleeve cartridge. The method includes closing, banding and fusing one end of a length of tubular woven mesh sleeve, filling the pocket formed thereby with particulate polymer material and closing, fusing and folding over the opposite end and banding the end to form a loop for facilitating removal of the cartridge from a filter housing. The cartridge is configured to closely fit the internal cavity of the chosen housing such that flow from the inlet into the cavity does not bypass the cartridge to the outlet.

The exemplary embodiment has been described with reference to the exemplary disclosed embodiment. Obviously, modifications and alterations will occur to others upon reading and understanding the preceding detailed description. It is intended that the exemplary embodiment be construed as including all such modifications and alterations insofar as they come within the scope of the appended claims or the equivalents thereof.

### FURTHER SUMMARY OF THE INVENTION

1. A fluid filter cartridge for use in a filter housing comprising:
   (a) a tubular sleeve of monofilament woven mesh polyethylene material having the opposite ends of the sleeve sequentially gathered to closure, banded and fused; and,
   (b) a filler of particulate polymer material dispersed in the sleeve.
2. The cartridge of 1, wherein the particulate polymer material has a specific gravity in the range of about 0.27-0.40.
3. The cartridge of 1, wherein the filler includes an antimicrobial agent chemically and permanently bound.
4. The cartridge of 1, wherein the sleeve is formed of woven polyethylene terephthalate mesh material.
5. The cartridge of 1, wherein the sleeve is formed of woven monofilament of about 0.01 inches (0.254 mm) thickness.
6. The cartridge of 1, wherein the monofilament has a tensile strength per ASTM-D-2265 of 7.5 Ibs.
7. The cartridge of 1, wherein the sleeve has a wall thickness of about 0.025 inches (0.635 mm).
8. The cartridge of 1, wherein the particulate polymer is treated with an organosilane antimicrobial agent.
9. The cartridge of 1, wherein the sleeve is expandable from about 38 mm O.D. to about 89 mm O.D.
10. The cartridge of 1, wherein the monofilament has a specific gravity of about 1.38.
11. The cartridge of 1, wherein the sleeve is filled with shredded polymer material
12. A method of making a fluid filter cartridge for use in a filter housing comprising:
   (a) forming a tubular sleeve of monofilament woven polyethylene mesh material;
   (b) gathering to closure, banding and fusing an end of the sleeve and forming a pocket;
   (c) filling the pocket with particulate polymeric material;
   (d) gathering to closure and fusing an end of the sleeve opposite the one end; and,
   (e) folding over and banding the opposite end.
13. The method defined in 12, wherein the step of forming a sleeve includes forming the sleeve of polyethylene terephthalate woven mesh.
14. The method defined in 12, wherein the step of forming a sleeve includes forming a sleeve of woven monofilament of about 0.01 inches (0.254 mm) thickness.
15. The method defined in 12, wherein the step of forming a sleeve includes forming of woven monofilament having a tensile strength per ASTM-D-2265 of 7.5 lbs.
16. The method defined in 12, wherein the step of forming a tubular sleeve includes forming a sleeve having a wall thickness of about 0.025 inches (0.635 mm).
17. The method defined in 12, wherein the step of filling the pocket includes filling with particulate polymer material treated with organosilane antimicrobial agent.

## Claims

1. A fluid filter cartridge (10) for use in a filter housing (30) comprising:
(a) a tubular sleeve (12) of monofilament woven mesh polyethylene material having the opposite ends of the sleeve sequentially gathered to closure, banded (16) (18) and fused; and,
(b) a filler of particulate polymer material (14) dispersed in the sleeve.

2. The cartridge of claim 1; wherein the particulate polymer material has a specific gravity in the range of about 0.27-0.40.

3. The cartridge of claim 1, wherein the filler includes an antimicrobial agent chemically and permanently bound.

4. The cartridge of claim 1, wherein the sleeve is formed of woven polyethylene terephthalate mesh material.

5. The cartridge of claim 1, wherein the monofilament has a tensile strength per ASTM-D-2265 of 7.5 Ibs.

6. The cartridge of claim 1, wherein the sleeve has a wall thickness of about 0.025 inches (0.635 mm).

7. A method of making a fluid filter cartridge (10) for use in a filter housing (30) comprising:
(a) forming a tubular sleeve (12) of monofilament woven polyethylene mesh material;
(b) gathering to closure, banding (16) and fusing an end of the sleeve and forming a pocket;
(c) filling the pocket with particulate polymeric material (14);
(d) gathering to closure and fusing an end of the sleeve opposite the one end; and,
(e) folding over and banding (18) the opposite end.

8. The method defined in claim 7, wherein the step of forming a sleeve includes forming the sleeve of polyethylene terephthalate woven mesh.

9. The method defined in claim 7, wherein the step of forming a sleeve includes forming a sleeve of woven monofilament of about 0.01 inches (0.254 mm) thickness.

10. The method defined in claim 7, wherein the step of forming a sleeve includes forming of woven monofilament having a tensile strength per ASTM-D-2265 of 7.5 lbs.
